# EUROPEAN PATENT SPECIFICATION

(11) **EP 0 269 767 B1**
(45) Date of publication and mention of the grant of the patent: **17.03.1993**
(21) Application number: 86308644.3
(22) Date of filing: 06.11.1986
(51) Int. Cl.: H02J 7/34

(54) **Power supply apparatus**
Stromversorgungsgerät
Alimentation électrique

(43) Date of publication of application: 08.06.1988
(73) Proprietor: HALLIBURTON COMPANY, Duncan Oklahoma 73536 (US)
(72) Inventor: Noordenbos, Andreas Marinus, Santpoort (NL)
(74) Representative: Wain, Christopher Paul

(56) References cited:
- DE-A- 2 531 680
- US-A- 3 443 115
- WESCON TECHNICAL PAPERS, vol. 11, no. 4, 22/25 August 1967, pages 1-13, Worthington, Ohio, US; Dr. S.P. JACKSON et al.: "Redundancy and switching in standby power systems"

## Description

This invention relates generally to power supplies and more particularly, to a downhole tool having a battery pack having switchable sets of batteries for powering the downhole tool during different time periods during which different currents are required so that the tool is operable for a longer overall time.

In the oil and gas industry downhole electronic equipment for recording pressure, temperature or other well data is usually powered by batteries contained in the equipment to be lowered into a well bore. One type of battery known to have been used in such an environment is a zinc silver oxide battery, or groups of these batteries, which can supply both relatively high and low currents within an operating temperature range between approximately 15.6°C/60°F and approximately 170°C/338°F. Another known type of battery is a lithium based battery which has heretofore had somewhat limited, if any, utility in such an environment because this type of battery cannot provide relatively high currents which are sometimes needed by the downhole electronic equipment. The lithium based battery is also primarily an elevated temperature (e.g., above approximately 100°C/212°F) battery so that this type might inadequately provide the relatively low currents at lower temperatures which might be encountered, such as an ambient surface temperature at the mouth of the well or other relatively low temperature at locations in the upper hole.

The lithium type battery does, however, have one particularly desirable characteristic, namely, an energy density which is significantly greater than the energy density of the zinc silver oxide type battery. For example, the energy density of a zinc silver oxide battery might be only 50% to 70% of the energy density of a lithium battery. That is, lithium batteries contain more electrical energy than comparable zinc silver oxide batteries; however, the former are useful only at relatively low currents and generally at relatively elevated temperatures. This means that, in a suitable low current drawing, high temperature environment, a lithium battery would have a longer operating life than a comparable zinc silver oxide battery under similar continuous operating conditions.

The foregoing differences in types of batteries which might be used in downhole electronic equipment are significant because such equipment generally has different current requirements during different periods of operation of the equipment. For example, a downhole electronic recorder that stores data in EPROM memory might require three different currents. For the EMR 502/504 memory gauge from Geophysical Research Corporation (GRC), the three currents required are typically 200 milliamps (mA) for 7.1 seconds to sample data, typically 500 mA for 0.1 second to store data, and typically 20 mA for up to several minutes to wait until the next data sample time. In a typical run while being powered exclusively by zinc silver oxide batteries, this tool might operate for 120 to 150 hours and record 2000 to 4000 pressure or temperature samples. A majority of the energy expended from the zinc silver oxide batteries in operating this tool would be expended at the low standby current of typically 20 mA while waiting between samples. This could be more efficiently operated by the higher energy density lithium type battery than the relatively lower energy density zinc silver oxide type battery; however, the lithium type battery cannot provide the relatively high currents needed to sample and store the data.

To more efficiently operate such equipment and thereby to extend the operating time of such equipment, there is the need for an improved power supply, which provides relatively high currents when needed, but which uses a more efficient or higher energy density source to provide the relatively lower currents which are more often required. Such a power supply should result in increased run times for the electronic equipment, or load, energized by such power supply. It would also be desirable for such an improved power supply to be less expensive than other types which may have heretofore been used. It would also be desirable if such an improved power supply and method could produce a space saving, which is important when such a power supply and method would be used with a downhole electronic equipment which of necessity has limited space so that it will fit into the well bore.

US-A-3443115 discloses a power supply comprising a fuel cell and a battery connected in parallel, for use in energizing a load having greatly varying current requirements. The fuel cell powers the load under normal operating conditions, and means are provided to connect the battery to the load in addition to the fuel cell when the fuel cell voltage is low due to a large current being drawn. Whilst this type of power supply would meet some of the aforementioned needs, a further problem not solved by this power supply is to ensure adequate supply of power over a wide range of temperatures.

In general terms, the present invention solves this problem by using energy sources having first and second operating temperatures.

The present invention provides a downhole tool having a power supply comprising a first plurality of zinc silver oxide batteries having a first energy density, characterised in that the power supply further comprises a second plurality of lithium based batteries having a second energy density which is greater than said first energy density, the first plurality of batteries being suitable for supplying a current which is greater than the maximum current which the second plurality of batteries is suitable for supplying and the first plurality of batteries having an operating temperature range which includes temperatures lower than the minimum operating temperature of the second plurality of batteries; and the power supply further comprises connecting means which are automatically operable to connect either or both of the pluralities of batteries in circuit with the load, for causing the second plurality of batteries to supply the current required by the load when the ambient temperature is above said minimum operating temperature and that current is not greater than said maximum current of said second plurality of batteries and for causing the first plurality of batteries to supply at least part of the required current when that current is greater than said maximum current, and for causing the first plurality of batteries to supply current to the load when the ambient temperature of the power supply is too low for the second plurality of batteries to supply the current required by the load.

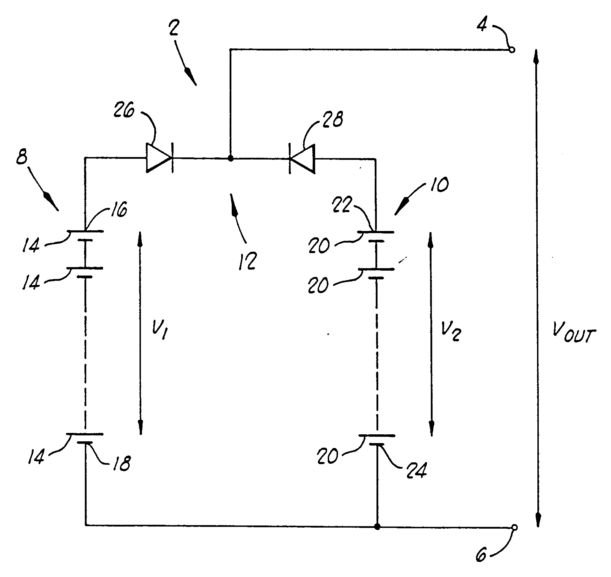

Therefore, from the foregoing, it is a general object of the present invention to provide downhole tool having a novel and improved power supply. Other and further objects, features and advantages of the present invention will be readily apparent to those skilled in the art when the following description of the preferred embodiment is read in conjunction with the accompanying drawing, which is a schematic circuit diagram of a power supply constructed in accordance with the preferred embodiment of the present invention.

The drawing shows a power supply 2 constructed in accordance with the preferred embodiment of the present invention. The power supply 2 is specifically adapted for use as a power pack for enabling longer operating times of an electrical load, such as a downhole memory recorder which is to be used downhole in a well bore and to be energized by at least a minimum operating voltage and which is to draw different currents at different stages of operation. This load is connected across two output terminals 4, 6 so that an output voltage, V_{OUT}, generated by the power supply 2 is applied to the load.

The power supply 2 of the preferred embodiment includes two energy source means 8, 10, each having a respective energy density with one of the energy densities being greater than the energy density of the other energy source means. The energy source means 8 will be considered to have the lower energy density, and the energy source means 10 will be considered to have the higher energy density in the following description. The lower energy density source 8 provides a maximum current which is greater than can be provided from the higher energy density source 10 in the preferred embodiment.

The power supply 2 also broadly includes connector means 12 for conducting the lesser current from the source 10 to a load connected to the terminals 4, 6 when the load does not require a current greater than such lesser current and for conducting the greater current from the source 8 to the connected load when the load does require a current greater than the lesser current.

The energy source 8, which has the lower energy density but which provides the larger current, includes a plurality of batteries, or battery cells, 14 connected in electrical series between two end terminals or poles 16, 18. In the preferred embodiment each battery 14 is a zinc silver oxide battery which is operable over a temperature range between approximately 15.6°C/60°F and approximately 170°C/338°F. This range encompasses temperatures above and below a predetermined temperature included within this range. This range of operation is of significance relative to the energy source 10 as will be subsequently described hereinbelow.

The batteries 14 connected in electrical series as shown in the drawing provide a voltage, V₁, which is to be greater than the minimum operating voltage at or above which V_{OUT} is to be maintained when the load is connected to the output terminals 4, 6 and operated by the power supply 2. Under either no-load or load conditions, V₁ should remain substantially stable regardless of the current to be drawn by the load connected to the output terminals 4, 6. Thus, this voltage should remain substantially stable regardless of whether the energy source 8 is providing current to the connected load when the connected load requires the relatively larger current which the source 8 is capable of providing, or whether the energy source 10 is providing a lower needed current, or whether the energy source 8 is providing such lower current as might be needed when the energy source 10 is unable to provide such lower current in a relatively low temperature environment in which a particular embodiment of the energy source 10 might be inoperable.

The energy source 10, which has the higher energy density but which provides the smaller maximum current, comprises a plurality of batteries, or battery cells, 20 connected in electrical series between two terminals or poles 22, 24. This plurality of batteries is connected in electrical parallel with the serially connected batteries 14 by having the terminals 18, 24 connected by a suitable electrical conductor, which connected terminals are connected to the terminal 6, and by having the terminals 16, 22 connected through the connector means 12 in a manner more specifically described hereinbelow.

The batteries, or battery cells, 20 are lithium based batteries. These can be of the type such that the zinc silver oxide batteries will have energy densities of only approximately 50-70% of the energy densities of the lithium batteries. These lithium based batteries provide current throughout a respective temperature range which is greater than the aforementioned predetermined temperature encompassed within the temperature range throughout which the zinc silver oxide batteries 14 operate. In the preferred embodiment this predetermined temperature is 100°C/212°F.

The serially connected batteries 20 provide a voltage V₂. The open circuit magnitude of this voltage V₂ is greater than the open circuit value of V₁ under open circuit conditions. The voltage V₂, however, is variable between such a magnitude greater than the voltage V₁ and a magnitude which is less than V₁. The variation occurs automatically in response to the current required by the load connected to the terminals 4, 6. More particularly, V₂ varies between a magnitude substantially equal to (which includes being exactly equal to) the open circuit value of V₂ and a magnitude less than the open circuit value of V₁ in response to the different currents drawn by the connected load at the different stages of operation of such load. This difference is important to the operation of the power supply 2 as will be further described hereinbelow; however, it is to be noted here that this difference makes important the ratio between the number of the batteries 14 and the number of the batteries 20 used so that the appropriate resultant voltage difference will be obtained. The particular ratio of these batteries depends upon the respective voltages of each individual battery or cell 14, 20 and what working voltages are needed, as well as upon what components are used in constructing the connector means 12. By way of one example, it could be that the sum voltage of the batteries 14 (i.e., V₁) would be 60-80% of the sum voltage of the batteries 20 (i.e., V₂). More specifically, if a nominal V_{OUT} of 6V_{DC} were needed to operate the load connected to the terminals 4, 6, the batteries 14 might be selected so that the open circuit magnitude of V₁ would be approximately 7.5V_{DC} and so that the open circuit value of V₂ would be approximately 9.0-12.0 V_{DC}.

At any one time, either or both of the energy sources 8, 10 can be connected in circuit to the output of the terminals 4, 6 and any load connected to these terminals. This selective connection is made by means of the connector means 12 which, therefore, provides switch means for switchably connecting a respective one of the two pluralities of batteries in circuit with a load connected to the terminals 4, 6. This switchable connection is made in response to the current drawn by the connected load. This switching is achieved in the preferred embodiment by constructing the connector means of two diodes 26, 28 each of which also provides protection to its respective circuit when the other circuit is connected to energize a connected load.

The diodes 26, 28 have cathodes which are connected in common to the terminal 4. It is through this common connection that each diode 26, 28 can connect its respective plurality of batteries to the load connected to the terminal 4. The anode of the diode 26 is connected to the terminal 16 of the energy source 8, and the anode of the diode 28 is connected to the terminal 22 of the energy source 10. In the preferred embodiment the diodes 26, 28 are germanium diodes because they have lower operating voltage drops than silicon diodes; however, the scope of the present invention is not limited to such specific components. It is also to be noted that other arrangements of the components shown in the drawing could be made to adapt the illustrated preferred embodiment to other polarity arrangements.

Under no load conditions (i.e., open circuit conditions with no current flowing), V_{OUT} will be V₂ less the voltage drop across the diode 28 because V₂ is greater than V₁ under open circuit conditions. The voltage differential causes the diode 28 to be biased on and the diode 26 to be biased off. Under low current load operation, wherein a low current within the capacity of the energy source 10 is provided to a load connected across the terminals 4, 6, V_{OUT} again equals V₂ less the voltage drop across the diode 28 because V₂ still remains greater than V₁. This operation holds when the power supply 2 is used in an environment wherein the temperature is within the operating range of the batteries 20 constituting the energy source 10. If the power supply 2 is in a sufficiently low temperature environment and if as a result the voltage V₂ drops sufficiently low, then the diode 26 is biased on by the substantially stable V₁ so that the diode 26 provides means for conducting a current from the source 8 to the load when the load does not require a current greater than the current which could have been provided from the energy source 10 but for the temperature being below the predetermined temperature at which the energy source 10 is operable.

The voltage V₂ also decreases under high current load conditions wherein the load connected across the terminals 4, 6 requires a current greater than can be provided by the energy source 10. This current drain causes the voltage V₂ to decrease until it reaches at least a voltage which allows the voltage V₁ to forward bias the diode 26 so that the connector means 12 then connects the energy source 8 to the load as well (during normal operation wherein the batteries 20 are not sufficiently depleted, the diode 28 will stay in a conducting state). For this operation, V_{OUT} would equal V₁ less the voltage drop across the diode 26. When the current requirement returns to the lower level, the voltage V₂ goes up again, thereby causing the diode 26 to switch the energy source 8 off line so that the low current is again conducted to the load from the energy source 10 only. The diode 28 prevents recharging the batteries 20 of the energy source 10 by the batteries 14 of the energy source 8 when the batteries 20 are sufficiently depleted and the batteries 14 are not so that the energy source 8 is connected through the diode 26 in circuit with the load connected to the terminals 4, 6. The point of depletion occurs when the batteries 20 are depleted so badly that the open circuit sum voltage V₂ of these batteries is less than the voltage on the connector means 12 (V_{OUT}).

The foregoing provides a method of energizing a load requiring one current during one time period and requiring another current during another time period, which one current is greater than the other current. This method comprises the steps of communicating to the load during the one time period a first energy source having a first energy density, and communicating to the load during the other time period a second energy source having a second energy density greater than the first energy density. The first-mentioned communicating step includes defining the first energy source with a first plurality of batteries providing a first voltage, and it further includes connecting a first diode between the first plurality of batteries and the load. The second-mentioned communicating step includes defining the second energy source with a second plurality of batteries providing a second voltage less than the first voltage during the one time period and greater than the first voltage during the other time period, and it further includes connecting a second diode between the second plurality of batteries and the load. The first energy source is defined with a plurality of batteries including zinc silver oxide, and the second energy source is defined with a plurality of batteries including lithium.

The first communicating step can also be said to include switching a first plurality of serially connected batteries through a first diode to the load during the one time period, and the second communicating step can be said to include switching a second plurality of serially connected batteries through a second diode to the load during the other time period.

A test of the above-described embodiment was conducted using five zinc silver oxide batteries (type 4016LF from VARTA) as the energy source 8 combined with three lithium based batteries (type 3B90 from ElectroChem Inc.) as the energy source 10. This combination powered a GRC memory gauge EMR 502/504 for approximately 300 hours. A second test was conducted with five of the same type of zinc silver oxide batteries combined with four lithium batteries (type LCP14HT from SAFT). The memory gauge was run for approximately 342 hours with this combination. In both tests, the batteries were in an oven which was switched on two hours after the start of the tool and then heated to approximately 137°C/278.6°F and maintained at that temperature until the end of the test. The difference in the numbers of lithium batteries used for both tests resulted from the fact that the open cell voltage of the two types was not the same. These run times are to be compared with the typical 120-150-hour run times obtained when only zinc silver oxide batteries are used.

Thus, the present invention is well adapted to carry out the objects and attain the ends and advantages mentioned above as well as those inherent therein.

## Claims

1. A downhole tool having a power supply comprising a first plurality (8) of zinc silver oxide batteries (14) having a first energy density, characterised in that the power supply further comprises a second plurality (10) of lithium based batteries (20) having a second energy density which is greater than said first energy density, the first plurality of batteries (14) being suitable for supplying a current which is greater than the maximum current which the second plurality of batteries (20) is suitable for supplying and the first plurality of batteries (14) having an operating temperature range which includes temperatures lower than the minimum operating temperature of the second plurality of batteries (20); and the power supply further comprises connecting means (26,28) which are automatically operable to connect either or both of the pluralities (8,10) of batteries (14,20) in circuit with the load, for causing the second plurality of batteries (20) to supply the current required by the load when the ambient temperature is above said minimum operating temperature and that current is not greater than said maximum current of said second plurality of batteries (20) and for causing the first plurality of batteries (14) to supply at least part of the required current when that current is greater than said maximum current, and for causing the first plurality of batteries (14) to supply current to the load when the ambient temperature of the power supply is too low for the second plurality of batteries to supply the current required by the load.

2. A downhole tool as defined in claim 1, wherein: said first and second pluralities of batteries are connected to each other at one terminal; and said connector means includes diode means (26,28) for connecting said first plurality of batteries (14) to said second plurality of batteries (20) at another terminal.

3. A downhole tool as defined in claim 2, wherein said diode means includes: first diode means (26) for connecting said first plurality of batteries (8) to a load; and second diode means (28) for connecting said second plurality of batteries to said first diode means (26) and to the load.

4. A downhole tool as defined in any preceding claim, wherein said first plurality of batteries (8) has a first voltage (V₁); and said second plurality of batteries (10) has a second voltage (V₂) variable between a magnitude greater than said first voltage (V₁) and a magnitude less than said first voltage in response to the current drawn therefrom, said second plurality of batteries being connected through said connector means (26,28) in electrical parallel to said first plurality of batteries.

## Patentansprüche

1. Bohrlochwerkzeug mit einer Energieversorgung enthaltend eine erste Mehrzahl (8) von Zink/Silberoxidbatterien (14) einer ersten Energiedichte, dadurch gekennzeichnet, daß die Energieversorgung ferner eine zweite Mehrzahl (10) von Batterien (20) auf Lithiumbasis einer zweiten Energiedichte aufweist, die größer als die erste Energiedichte ist, wobei die erste Mehrzahl von Batterien (14) zur Lieferung eines Stroms geeignet ist, der größer als der maximale Strom ist, zu dessen Lieferung die zweite Mehrzahl von Batterien (20) geeignet ist, und die erste Mehrzahl von Batterien (14) einen Betriebstemperaturbereich hat, der Temperaturen unter der tiefsten Betriebstemperatur der zweiten Mehrzahl von Batterien (20) einschließt; und daß die Energieversorgung weiterhin Verbindungsmittel (26,28) aufweist, die automatisch zur Aufschaltung entweder einer oder beider der Mehrzahlen (8,10) von Batterien (14,20) auf die Last betreibbar sind um zu bewirken, daß die zweite Mehrzahl von Batterien (20) den von der Last benötigten Strom liefert, wenn die Umgebungstemperatur oberhalb der tiefsten Betriebstemperatur liegt und dieser Strom nicht größer als der maximale Strom der zweiten Mehrzahl von Batterien (20) ist, und um zu bewirken, daß die erste Mehrzahl von Batterien (14) wenigstens einen Teil des benötigten Stroms liefert, wenn dieser Strom größer als der maximale Strom ist, und um zu bewirken, daß die erste Mehrzahl von Batterien (14) den Strom an die Last liefert, wenn die Umgebungstemperatur der Stromversorgung dafür zu niedrig ist, daß die zweite Mehrzahl von Batterien (20) den von der Last benötigten Strom liefert.

2. Bohrlochwerkzeug nach Anspruch 1, dadurch gekennzeichnet, daß die erste und zweite Mehrzahl von Batterien an einem Pol miteinander vebunden sind; und daß die Verbindungsmittel Diodenmittel (26,28) zur Verbindung der ersten Mehrzahl von Batterien (14) mit der zweiten Mehrzahl von Batterien (20) an einem anderen Pol enthalten.

3. Bohrlochwerkzeug nach Anspruch 2, dadurch gekennzeichnet, daß die Diodenmittel enthalten: erste Diodenmittel (26) zur Verbindung der ersten Mehrzahl von Batterien (8) mit einer Last; und zweite Diodenmittel (28) zur Verbindung der zweiten Mehrzahl von Batterien mit den ersten Diodenmitteln (26) und der Last.

4. Bohrlochwerkzeug nach einem der vorstehenden Ansprüche, dadurch gekennzeichnet, daß die erste Mehrzahl von Batterien (8) eine erste Spannung (V₁) hat; und daß die zweite Mehrzahl von Batterien (10) eine zweite Spannung (V₂) hat, die unter Ansprechen auf den daraus gezogenen Strom zwischen einer Größe, die größer als die erste Spannung (V₁) ist, und einer Größe, die kleiner als die erste Spannung ist, veränderlich ist, wobei die zweite Mehrzahl von Batterien durch die Verbindungsmittel (26,28) elektrisch parallel mit der ersten Mehrzahl von Batterien verbunden ist.

## Revendications

1. Outil de fond de puits possédant une alimentation électrique comprenant une première pluralité (8) de batteries à l'oxyde d'argent et zinc (14) ayant une première densité d'énergie, caractérisé en ce que l'alimentation électrique comprend en outre une seconde pluralité (10) de batteries à base de lithium (20) ayant une seconde densité d'énergie qui est supérieure à ladite première densité d'énergie, la première pluralité de batteries (14) étant adaptée pour fournir un courant qui est supérieur au courant maximum que la seconde pluralité de batteries (20) est apte à fournir et la première pluralité de batteries (14) ayant une gamme de températures de fonctionnement qui comprend des températures plus basses que la température minimale de fonctionnement de la seconde pluralité de batteries (20) ; et l'alimentation électrique comprend de plus des moyens de connexion (26, 28) qui sont mis en oeuvre automatiquement pour mettre en circuit avec la charge l'une des pluralités (8, 10) de batteries (14, 20) ou les deux pour entraîner la seconde pluralité de batteries (20) à fournir le courant requis par la charge lorsque la température ambiante est au-dessous de ladite température minimale de fonctionnement et que le courant n'est pas supérieur audit courant maximum de ladite seconde pluralité de batteries (20) et pour entraîner la première pluralité de batteries (14) à fournir au moins une partie du courant requis lorsque ce courant est supérieur audit courant maximum, et pour entraîner la première pluralité de batteries (14) à fournir du courant à la charge lorsque la température ambiante de l'alimentation électrique est trop basse pour que la seconde pluralité de batteries fournisse le courant requis par la charge.

2. Outil de fond de puits suivant la revendication 1 dans lequel lesdits première et seconde pluralités de batteries sont reliées l'une à l'autre à une borne ; et lesdits moyens de connexion comprennent des moyens à diode (26, 28) pour relier ladite première pluralité de batteries (14) à ladite seconde pluralité de batteries (20) à une autre borne.

3. Outil de fond de puits suivant la revendication 2, dans lequel lesdits moyens à diode comprennent : des premiers moyens à diode (26) pour relier ladite première pluralité de batteries (8) à une charge ; et des seconds moyens à diode (28) pour relier ladite seconde pluralité de batteries auxdits premiers moyens à diode (26) et à la charge.

4. Outil de fond de puits suivant l'une quelconque des revendications précédentes, dans lequel ladite première pluralité de batteries (8) a une première tension (V₁) ; et ladite seconde pluralité de batteries (10) a une seconde tension (V₂), variable entre une valeur supérieure à ladite première tension (V₁) et une valeur inférieure à ladite première tension en réponse au courant extrait de celle-ci, ladite seconde pluralité de batteries étant reliée par l'intermédiaire desdits moyens de connexion (26, 28) en configuration électrique parallèle à ladite première pluralité de batteries.
